# EUROPEAN PATENT APPLICATION

(11) **EP 4 535 728 A1**
(43) Date of publication of application: **09.04.2025**
(21) Application number: 24203810.7
(22) Date of filing: 01.10.2024
(51) Int. Cl.: H04L 9/40, H04W 12/12, H04W 12/37

(54) **COMMUNICATION SYSTEM, AND COMMUNICATION METHOD**

(30) Priority: 03.10.2023 JP 2023172288
(71) Applicant: TOYOTA JIDOSHA KABUSHIKI KAISHA, Aichi-ken, 471-8571 (JP)
(72) Inventor: OKADA, Kazuya, Toyota-shi, 471-8571 (JP); KANEKO, Naoya, Toyota-shi, 471-8571 (JP); SHAO, Xiao, Toyota-shi, 471-8571 (JP); MA, Jing, Toyota-shi, 471-8571 (JP); ASAOKA, Takuya, Toyota-shi, 471-8571 (JP)
(74) Representative: TBK

(57) **Abstract**

A communication system configured to provide a communication network to a communication device (2) includes a control device (11n). The control device (11n) is configured to execute: a reception process of receiving, from an organization outside the communication system, threat information regarding a threat to the communication device (2) that uses the communication network; and a protection process of protecting the communication device (2) based on the received threat information.

## Description

### BACKGROUND OF THE INVENTION

### 1. Field of the Invention

The present disclosure relates to communication systems, and communication methods.

### 2. Description of Related Art

Communication systems are expected to become more sophisticated, as exemplified by 5th Generation (5G), 5G Evolution, and 6th Generation (6G). However, even if communication systems become more sophisticated, the influence of external communication signals on networks cannot be ignored. For example, a system has been proposed as prior art that determines a feature of a normal call flow (normal signal group) including at least one normal communication signal and an abnormal call flow (abnormal signal group) including at least one abnormal communication signal. The abnormal call flow is a known attack call flow including a signal related to an attack from the outside. This system determines whether a call flow to be determined is an unknown call flow (unknown signal group), namely a call flow that is not known, based on a learning model (learning data) trained in advance to recognize normal call flows and abnormal call flows, and a feature of the call flow to be determined that is extracted by a preprocessing unit. Japanese Unexamined Patent Application Publication No. 2020-025220 (JP 2020-025220 A), Japanese Unexamined Patent Application Publication No. 2020-174391 (JP 2020-174391 A), 3rd Generation Partnership Project; Technical Specification Group Services and System Aspects; Procedures for the 5G System (5GS); Stage 2 (Release 18) 3GPP (registered trademark) TS 23.502 V18.2.0 (2023-06), and 3rd Generation Partnership Project; Technical Specification Group Services and System Aspects; 5G System Enhancements for Edge Computing; Stage 2 (Release 18) 3GPP (registered trademark) TS23.548 V18.3.0 (2023-09) disclose related art.

### SUMMARY OF THE INVENTION

However, as communication systems become more sophisticated and communication networks provided by the communication systems become more complex, the communication systems that manage the communication networks cannot easily identify signals related to attacks on the communication networks by themselves.

Embodiments of the present disclosure more broadly and reliably recognize attacks on a communication network and more appropriately respond to the attacks than the prior art.

One embodiment of the present disclosure is a communication system configured to provide a communication network to a communication device. The communication system includes a control device. The control device is configured to execute: a reception process of receiving, from an organization outside the communication system, threat information regarding a threat to the communication device that uses the communication network; and a protection process of protecting the communication device based on the received threat information.

The control device may be configured to uniformly execute the protection process on each communication device connected to the communication system.

The threat information may include information identifying a specific communication device targeted for an attack of the threat. The control device may be configured to execute the protection process on the specific communication device.

The specific communication device may be mounted on a vehicle, and the information identifying the specific communication device may include information identifying the vehicle.

The communication network may include a 5G core network, and the control device may be configured to receive the threat information regarding the threat using a Network Exposure Function (NEF) provided in the 5G core network.

The communication network may include a 5G core network, and the control device may be configured to directly receive the threat information regarding the threat without via a Network Exposure Function (NEF) provided in the 5G core network.

The control device may be configured to execute the protection process in a User Plane Function (UPF) through a Policy Control Function (PCF) provided in the 5G core network.

The control device may be configured to: when a format of the threat information is different from a format for which the protection process is executable, convert the format of the threat information to the format for which the protection process is executable, or identify the protection process to be executed in the UPF to respond to the threat information; and execute the protection process responding to the threat information in the converted format or the identified protection process in the UPF.

The control device may be configured to execute the protection process on a router connected to the communication network or a security device connected to the communication network.

The control device may be configured to: when a format of the threat information is different from a format for which the protection process is executable, convert the format of the threat information to the format for which the protection process is executable, or identify the protection process to be executed in the router or the security device to respond to the threat information; and execute the protection process responding to the threat information in the converted format or the identified protection process in the router or the security device.

The communication system may further include a storage device configured to store contract data based on a contract between a user of the communication device and a business operator that manages the communication system. The control device may be configured to determine, based on the contract data, the communication device to which the protection process is applied out of a plurality of the communication devices.

The control device may be configured to: create a simulated reception system in an information processing environment connected to outside of the communication system, the simulated reception system being a reception system that simulates an environment inside the communication device or a moving object equipped with the communication device; and guide an attack from inside or outside of the communication network provided by the communication system to the simulated reception system.

The communication network may include a 5G core network, and the control device may be provided in the 5G core network.

The communication network may include a 5G core network, and the control device may be provided as an Application Function (AF) connected to the 5G core network.

Another embodiment of the present disclosure is a control device for a communication system configured to provide a communication network to a communication device. The control device is configured to execute: a reception process of receiving, from an organization outside the communication system, threat information regarding a threat to the communication device that uses the communication network; and a protection process of protecting the communication device based on the received threat information.

Still another embodiment of the present disclosure is a communication method in a communication system configured to provide a communication network to a communication device. The communication method includes: executing a reception process of receiving, from an organization outside the communication system, threat information regarding a threat to the communication device that uses the communication network; and executing a protection process of protecting the communication device based on the received threat information.

The threat information may include information identifying a specific communication device targeted for an attack of the threat. The communication method may further include executing the protection process on the specific communication device.

The specific communication device may be mounted on a vehicle, and the information identifying the specific communication device may include information identifying the vehicle.

The communication network may include a 5G core network, and the reception process may include receiving the threat information regarding the threat using a Network Exposure Function (NEF) provided in the 5G core network.

The communication method may further include creating a simulated reception system in an information processing environment connected to outside of the communication system, the simulated reception system being a reception system that simulates an environment inside the communication device or a moving object equipped with the communication device; and guiding an attack from inside or outside of the communication network provided by the communication system to the simulated reception system.

The communication system of the present disclosure can more broadly and reliably recognize attacks on the communication network it provides and more appropriately respond to the attacks than the prior art.

### BRIEF DESCRIPTION OF THE DRAWINGS

Features, advantages, and technical and industrial significance of exemplary embodiments of the present disclosure will be described below with reference to the accompanying drawings, in which like signs denote like elements, and wherein:
FIG. 1 illustrates components constituting a 5th generation mobile communication system;
FIG. 2 illustrates the structure of threat information;
FIG. 3 shows an example of the configuration of a Network Function (NF), an Application Function (AF), and other information processing devices;
FIG. 4 shows an example of the configuration of a terminal that serves as user equipment (UE);
FIG. 5 is a sequence diagram illustrating a process of receiving threat information and a protection process in a communication system of a first embodiment;
FIG. 6 is a sequence diagram illustrating the process of receiving threat information and the protection process in the communication system of the first embodiment;
FIG. 7 illustrates a format conversion process;
FIG. 8 illustrates a process of selecting the protection process that is executed when a security cooperation unit receives threat information in a different format;
FIG. 9 is a sequence diagram illustrating a process of receiving threat information and a protection process in a communication system of a second embodiment;
FIG. 10 is a sequence diagram illustrating the process of receiving threat information and the protection process in the communication system of the second embodiment;
FIG. 11 is a sequence diagram illustrating a process of receiving threat information and a honeypot guidance process in a communication system of a third embodiment; and
FIG. 12 is a sequence diagram illustrating the process of receiving threat information and the honeypot guidance process in the communication system of the third embodiment.

### DETAILED DESCRIPTION OF EMBODIMENTS

Hereinafter, communication systems, control devices, and communication methods according to embodiments of the present disclosure will be described with reference to the drawings. The following embodiments are merely illustrative, and the present disclosure is not limited to the configurations of the embodiments. For example, although an example in which the present disclosure is applied to a 5th generation mobile communication system will be described below, the present disclosure may be applied to a 4th generation, 5th generation, or later generation mobile communication system. The present disclosure may be applied to mobile communication systems defined by standards other than the 3rd Generation Partnership Project (3GPP (registered trademark)), and may be applied to any wireless communication systems or wired communication systems other than mobile communication systems.

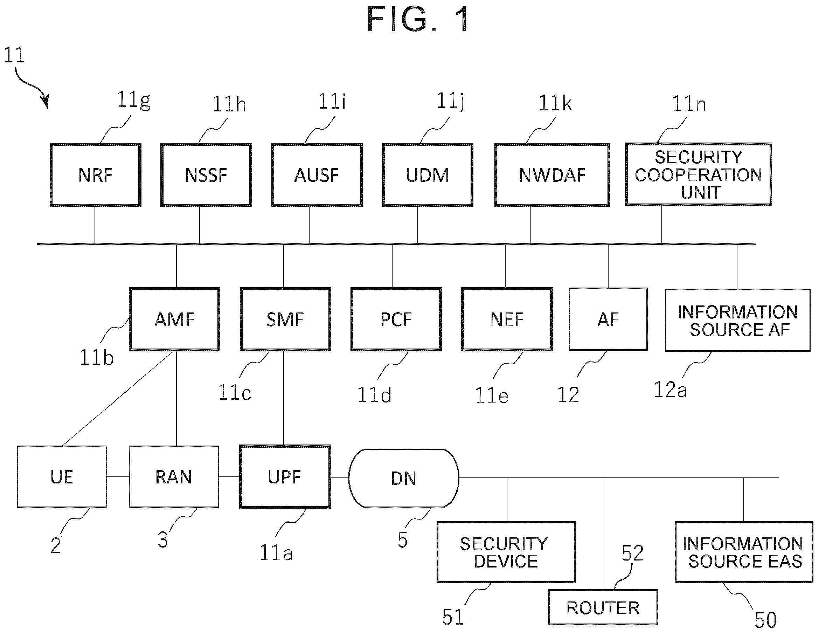

The communication system of the present disclosure provides a communication network to a communication device. The communication system includes a control device. The control device executes a process of receiving threat information regarding a threat to the communication device that uses the communication network from an organization outside the communication system and a protection process of protecting the communication device based on the received threat information. The communication system has, for example, a function called Network Exposure Function (NEF) 11e illustrated in FIG. 1, and exposes functions provided from the communication system to the outside. The NEF 11e receives from an external application server etc. information provided to the communication system. The threat information includes information regarding a cyberattack on the communication network and vulnerabilities of the communication network. A cyberattack typically refers to an attack on, for example, an information processing device or a terminal. In the present embodiment, an attack on the communication device (user equipment (UE) 2 in FIG. 1) connected to the communication network will be mainly described as an example.

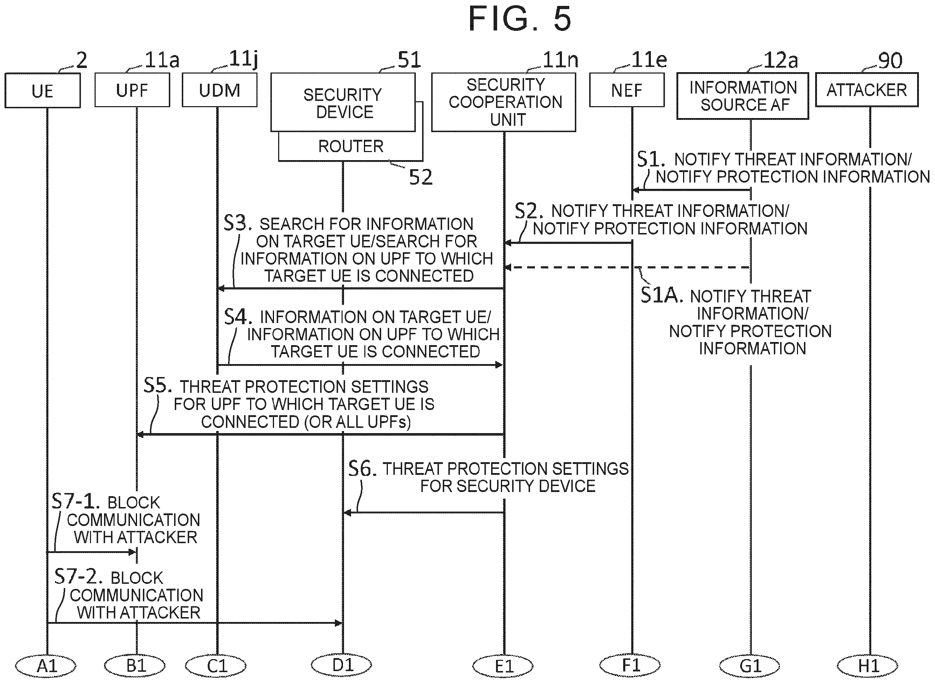

For example, the organization outside the communication system is connected to the communication system and uses a computer called an application server. For example, the application server provides the threat information to the control device either via the NEF 11e or directly without via the NEF 11e. The control device executes the protection process of protecting the communication device based on the received threat information. The threat information includes information identifying an attacker 90 (see, for example, FIG. 5) on the network. In each of the following embodiments, the term "attacker" refers to a communication device, information processing device, etc. that is a source of packets or traffic of an attack that poses a threat. The threat information may include information identifying a communication device targeted by the attacker 90, such as information identifying what is called the user equipment (UE) 2 (see FIG. 1) or information identifying a moving object etc. equipped with the UE 2. The moving object may be a vehicle, and the vehicles may be an autonomous vehicle.

The communication system is characterized in that it can perform the protection process on the communication device (UE 2) that uses the communication network, based on the threat information received from the organization outside the communication system. In other words, the communication system can protect the communication device that uses the communication network provided by the communication system from attacks by effectively using not only information possessed by the communication system alone but also threat information from the organization outside the communication system.

### First Embodiment

### Configuration of Communication System

A first embodiment will be described below with reference to the drawings. FIG. 1 illustrates components configuring a 5th generation mobile communication system (also referred to as "5G network (NW)"). In FIG. 1, the UE 2 is a terminal of a user (subscriber). A radio access network (RAN) 3 is an access network to a 5G core network (5GC). The RAN 3 is composed of base stations (Next Generation Node B (gNB)).

The 5G network includes the 5G core network (5GC) and an access network ((R)AN). The UE 2, a Data Network (DN) 5, and an Application Function (AF) 12 are connected to the 5G network. The 5GC includes Network Functions (NFs) 11a to 11k, 11n shown by bold rectangles. Each of the NFs 11a to 11k, 11n is a function implemented by one or more computers (information processing devices) executing a program. However, a single computer may implement two or more of the NFs 11a to 11k, 11n. In the present embodiment, the constituent elements of the 5GC are generally referred to as Network Functions (NFs) 11. The individual constituent elements of the 5GC are referred to as NEF 11e etc. In FIG. 1, each component is denoted by a general sign with an individual sign in parentheses. The 5GC can be said to be an example of the communication system.

As described above, the 5GC is a collection of components each having a predetermined function called NF 11. FIG. 1 illustrates the following components as the NFs 11 constituting the 5GC. The NFs are shown by bold rectangles in FIG. 1.
User Plane Function (UPF) 11a
Access and Mobility Management Function (AMF) 11b
Session Management Function (SMF) 11c
Policy Control Function (PCF) 11d
Network Exposure Function (NEF) 11e
Network Repository Function (NRF) 11g
Network Slice Selection Function (NSSF) 11h
Authentication Server Function (AUSF) 11i
Unified Data Management (UDM) 11j
Network Data Analytics Function (NWDAF) 11k
Security cooperation unit 11n
In the present embodiment, user plane packets that are sent and received by the UE 2 are referred to as user packets. The UPF 11a performs routing and forwarding, inspection, and QoS handling of user packets. The AMF 11b is a serving device for the UE 2 in the 5GC. The AMF 11b accommodates the RAN 3 and performs subscriber authentication, location (mobility) management for the UE 2, etc.

The SMF 11c manages protocol data unit (PDU) sessions, and controls the UPF 11a in order to perform QoS control and policy control. A PDU session is a virtual communication channel for data transfer between the UE 2 and the DN 5. The DN 5 is a data network outside the 5GC (such as the Internet).

The PCF 11d cooperates with the SMF 11c to perform QoS control, policy control, charging control, etc. In the QoS control, the quality of communication such as priority packet forwarding is performed. In the policy control, communication control such as QoS, and packet forwarding handling, charging, etc. based on network or subscriber information is performed.

The NEF 11e serves to mediate communication between the AF 12 or a node outside the 5GC and the 3GPP (registered trademark) NFs 11. For example, the NEF 11e securely exposes the functions and events of the individual NFs 11 to third parties, the AF 12, edge computers, etc. The NEF 11e translates between internal information of the 5GC and external information. For example, the NEF 11e translates between information that is handled by the AF 12 and information that is handled by the individual NFs 11 of the 5GC. For example, the NEF 11e translates between a service identifier in the AF 12 and the internal information of the 5GC.

The AF 12 is an element that interacts with the 5GC to provide services to users, and is called, for example, an external application server. The AF 12 that is considered to be trusted by a 5G network operator is allowed to directly access its associated NFs 11 of the 5GC. The AF 12 that is not allowed to directly access its associated NFs 11 of the 5GC uses an interface exposed to the outside via the NEF 11e in order to access the Network Functions of the 5GC.

An information source AF 12a is one of AFs 12. The information source AF 12a is, for example, an application server that is accessible from an organization outside the 5GC. The information source AF 12a receives information regarding a cyberattack etc. on the UE 2, namely a communication device that uses the communication network, from the organization outside the 5GC that is a communication system. Examples of the organization outside the 5GC include Computer Emergency Response Teams (CERTs), the U.S. National Institute of Standards and Technology (NIST), the Japan Computer Emergency Response Team Coordination Center (JPCERT/CC), industrial Information Sharing and Analysis Center (ISACs), individual terminal manufacturers, moving object manufacturers, moving objects distributors, and original equipment manufacturers (OEMs) that are outside a communication network operator that operates the 5GC.

The information source AF 12a is provided in, for example, the organization outside the 5GC. Alternatively, the information source AF 12a is connected to a computer of the organization outside the 5GC so as to be accessible from the organization outside the 5GC. The information source AF 12a provides threat information (in a format such as Structured Threat Information eXpression (STIX)) from the organization outside the 5GC to the security cooperation unit 11n.

In the present embodiment, the threat information that is provided from the information source AF 12a to the NEF 11e or the security cooperation unit 11n is provided according to, for example, a request/response model. For example, the information source AF 12a sends a request message requesting provision of the threat information to the NEF 11e or the security cooperation unit 11n. When the NEF 11e or the security cooperation unit 11n receives the threat information, the NEF 11e or the security cooperation unit 11n returns a response message to the information source AF 12a.

Alternatively, the threat information that is provided from the information source AF 12a to the NEF 11e or the security cooperation unit 11n may be provided according to, for example, a subscribe/notify model. That is, the NEF 11e or the security cooperation unit 11n sends a subscribe message to the information source AF 12a. When a trigger condition such as a condition that the threat information has been updated is satisfied, the information source AF 12a sends a notification to the NEF 11e or the security cooperation unit 11n. The NEF 11e or the security cooperation unit 11n then accesses the information source AF 12a and acquires the threat information.

In the present embodiment, the security cooperation unit 11n is provided as one of the NFs 11 in order to respond to the threat information provided from the information source AF 12a. Alternatively, the security cooperation unit 11n may be provided as one of the AFs 12. The information source AF 12a is an example of the control device. For example, when the security cooperation unit 11n receives the threat information from a vehicle manufacturer (or distributor), the security cooperation unit 11n may execute an attack protection process on all the UEs 2 installed in vehicles manufactured by the manufacturer and connected to the communication network. The security cooperation unit 11n may execute the attack protection process only on the UEs 2 installed in vehicles of a specific model out of the vehicles manufactured by the manufacturer and connected to the communication network. The attack protection process includes, for example, a process of filtering out packets or traffic that poses a threat based on the threat information, a process of mitigating traffic exceeding a predetermined mitigation value and discarding abnormal packets, and a process of analyzing an attack.

The security cooperation unit 11n can integrally and quickly respond to the threat within the communication network by collectively executing the attack protection process in the communication network against the attack based on the threat information. Based on information provided by CERT or NIST, the security cooperation unit 11n takes measures to block or mitigate packets or traffic that pose a threat in the entire communication network regardless of the manufacturers of the UEs 2 etc. The security cooperation unit 11n also responds to, for example, exposed information whose Common Vulnerability Scoring System (CVSS) score is 10, that is, whose vulnerability severity is "critical." For example, the security cooperation unit 11n selects a UE 2 etc. equipped with a target computer program etc. that has been found to be vulnerable, and applies the protection process throughout the communication network in the UPF 11a to which this UE 2 is connected.

The security cooperation unit 11n is an example of the control device. That is, the communication system is a communication system that provides a communication network to a communication device, and includes the security cooperation unit 11n as the control device. The security cooperation unit 11n executes a process of receiving threat information regarding a threat to the communication device (UE 2) that uses the communication network from the organization outside the communication system and a protection process of protecting the communication device based on the received threat information. The threat information may include, for example, data called signatures that describe the characteristics of various attacks.

The NRF 11g stores and manages information on the NFs 11 (e.g. AMF 11b, SMF 11c, and UPF 11a) in the 5GC. In response to an inquiry about an NF 11 an inquirer wants to use, the NRF 11g can reply with a plurality of candidate NFs 11.

The NSSF 11h has a function to select a network slice to be used by a subscriber from among network slices generated by network slicing. The network slices are virtual networks with specifications that match their usages.

The AUSF 11i is a subscriber authentication server that performs subscriber authentication under the control of the AMF 11b. The UDM 11j holds or manages subscriber related information. The subscriber related information can be said to be an example of the contract data. The contract data is, for example, information based on a contract between the user of the communication device (UE 2) and a business operator that manages the communication system (also referred to as operator or mobile network operator (MNO)). The UDM 11j provides the subscriber related information to each NF 11, or acquires, registers, deletes, and changes the status of the UE 2.

The NWDAF 11k has a function to collect data from each NF 11, an Operations, Administration, and Maintenance (OAM) terminal, etc. and analyze the data. The OAM terminal operates administers, and maintains the network (5GC). That is, the NWDAF 11k is the NF 11 that provides network analysis information.

The DN 5 is a data network outside the 5GC, such as the Internet. The DN 5 is connected to the communication network provided by the communication system (5GC) via one of the UPFs 11a. The UPFs 11a can have a multi-stage configuration. The UPF 11a in the last stage connected to the DN 5 is called a PDU Session Anchor User Plane Function (PSA UPF). The UPF 11a provided between the RAN 3 and the PSA UPF is called an Intermediary UPF (I-UPF).

In the example of FIG. 1, a security device 51, a router 52, and an information source Edge Application Server (EAS) 50 are connected to the DN 5. The security device 51 is, for example, a computer with a firewall. The information source EAS 50 is a computer on the DN 5 that notifies the security cooperation unit 11n of the communication system of threat information. Each of the security device 51 and the router 52 may be one of the AFs 12. When an application program of the information source EAS 50 provides threat information to the NEF 11e or the security cooperation unit 11n, the threat information is provided via one of the AFs 12. Therefore, each of the following embodiments is described on the assumption that threat information is provided by the information source AF 12a.

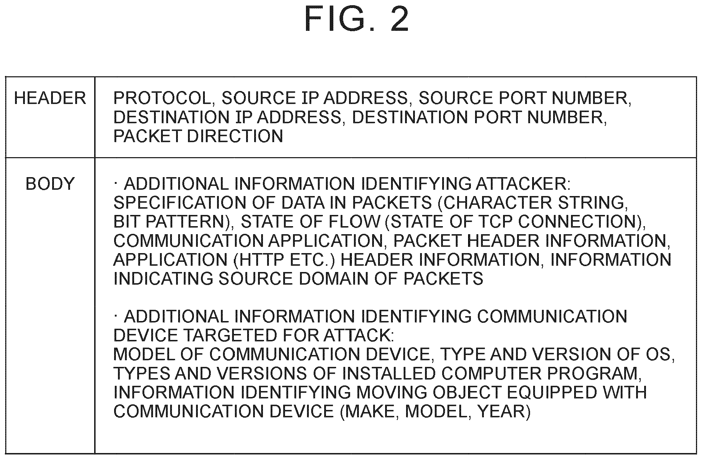

FIG. 2 illustrates the structure of threat information. In the present embodiment, the threat information includes a header and a body. The threat information is not limited to the format shown in FIG. 2. The threat information may be written in a character string according to a grammar of the STIX language etc. Alternatively, the threat information may be data in a binary format.

For example, the header may include at least one of the following pieces of information: a protocol, a source IP address, a source port number, a destination IP address, a destination port number, and a packet direction, etc. The security cooperation unit 11n identifies such packets or traffic to be monitored that poses a threat, based on the information illustrated in FIG. 2.

The protocol is a protocol by which the packets to be monitored based on the threat information are transferred. The source IP address is an IP address of the source of the packets, that is, the attacker 90. The source port number is a port number to which the packets were sent. The destination IP address and the destination port number are an IP address and a port number that identify the destination of the packets, respectively. The packet direction is a direction in which the packets to be monitored are sent. For example, the packet direction designates the direction from the source to the destination or the direction from the destination to the source. The pieces of information written in the header can be omitted individually. For example, when any of these pieces of information is omitted, the security cooperation unit 11n can interpret that "all" is designated for the omitted piece of information. For example, when the destination IP address is omitted, all destinations are to be monitored.

Additional information identifying the attacker 90 is set in the body. For example, the additional information identifying the attacker 90 includes at least one of the following pieces of information: specification of data in the packets, state of flow, information identifying a communication application, packet header information, and application (such as Hypertext Transfer Protocol (HTTP)) header information. Any or all of the pieces of the additional information identifying the attacker 90 may be omitted.

The specification of data in the packets specifies, for example, data included in the packets to be monitored. The data included in the packets to be monitored is, for example, character string information. The data included in the packets to be monitored may be binary data (bit pattern). For example, the binary data (bit pattern) may be specified in hexadecimal.

The state of flow is, for example, whether Transmission Control Protocol (TCP) connection has been established. The information specifying the communication application is, for example, an application layer protocol such as Hypertext Transfer Protocol (HTTP). The packet header information is, for example, specification of bits in fragments of IP datagram headers. The application header information includes, for example, specification of a request method in HTTP and a request Uniform Resource Identifier (URI) specified in the method. The additional information identifying the attacker 90 may further include information indicating a source domain of the packets.

Additional information identifying the communication device targeted for an attack may be set in the body. The additional information identifying the communication device targeted for an attack includes, for example, the model of the communication device (UE 2), the type and version of an operating system (OS), the type and version of a computer program installed on the UE 2, and information identifying a moving object equipped with the UE 2. The information identifying the moving object equipped with the UE 2 is, for example, the make (OEM), model, and year (year of initial registration) when the moving object is a vehicle.

The security cooperation unit 11n may uniformly execute the protection process on the UEs 2 connected to the communication system. The term "uniformly" means that the UEs 2 to be subjected to the protection process are not limited. However, as shown in FIG. 2, the threat information may include information identifying a specific communication device targeted for an attack by a threat (target UE 2). This identifying information includes a destination IP address, a destination port number, and additional information identifying the UE 2 targeted for an attack. Therefore, the security cooperation unit 11n may perform the protection process on the target UE 2 identified by the threat information.

### Configuration of Information Processing Device and Terminal

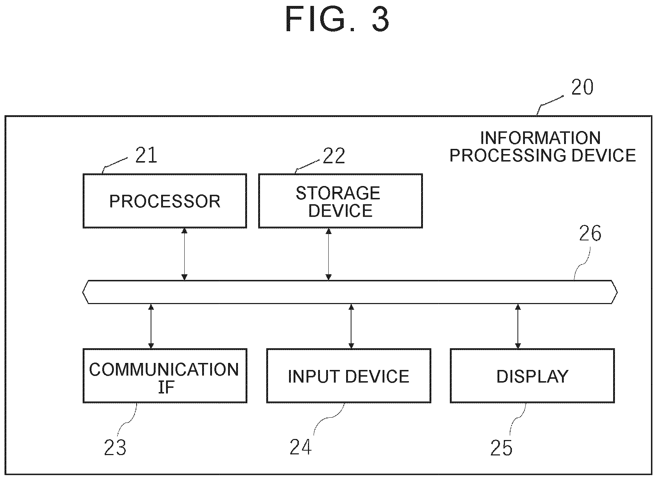

FIG. 3 shows an example of the configuration of an information processing device 20 that is operable as each of the NFs 11a to 11k, 11n, the AF 12, the information source AF 12a, the security device 51, the router 52, the information source EAS 50, etc. In FIG. 3, the information processing device 20 can be a dedicated or general-purpose information processing device (computer) such as a personal computer (PC), a workstation (WS), or a server machine. The information processing device 20 may be a collection (cloud) of one or more computers.

The information processing device 20 includes a processor 21 as a processing unit or a control unit (controller), a storage device 22, a communication interface 23 (communication IF 23), an input device 24, and a display 25. These components of the information processing device 20 are connected to each other via a bus 26.

The storage device 22 includes a main storage device and an auxiliary storage device. The main storage device is used as at least one of the following areas: a storage area for programs and data, an area for loading programs, a work area for programs, a buffer area for communication data, etc. The main storage device is a random access memory (RAM) or a combination of a RAM and a read-only memory (ROM). The auxiliary storage device is used as a storage area for data and programs. A nonvolatile storage medium is used as the auxiliary storage device. Examples of the nonvolatile storage medium include a hard disk, a solid state drive (SSD), a flash memory, and an electrically erasable programmable read-only memory (EEPROM). The storage device 22 may include a drive device for a disk storage medium.

The communication IF 23 is a circuit that performs a communication process. The communication IF 23 is, for example, a network interface card (NIC). The communication IF 23 may be a wireless communication circuit that performs wireless communication (such as 5G, wireless local area network (LAN) (Wi-Fi (registered trademark)), and Bluetooth (registered trademark) Low Energy (BLE)). The communication IF 23 may be a combination of a circuit that performs a wired communication process and a wireless communication circuit.

The input device 24 includes keys, buttons, a pointing device, a touch panel, etc., and is used to enter information. The display 25 is, for example, a liquid crystal display or an organic electro-luminescence (OEL) display. The display 25 displays information and data.

The processor 21 performs various processes by executing various programs stored in the storage device 22. The information processing device 20 is operable as each of the NFs 11 (UPF 11a etc.), the AF 12, the information source AF 12a, the security device 51, the router 52, and the information source EA 50 by the processor 21 executing the programs stored in the storage device 22.

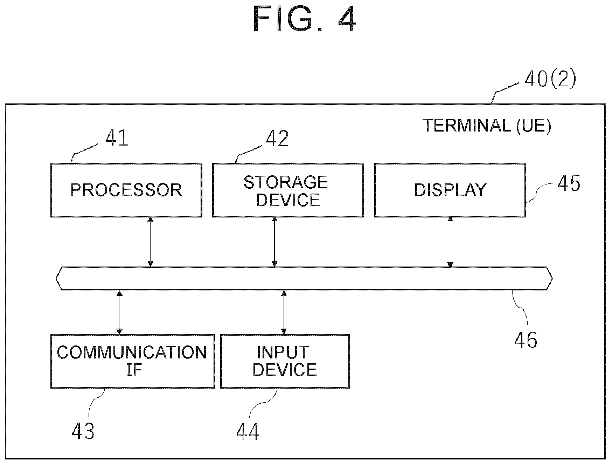

FIG. 4 shows an example of the configuration of a terminal 40 that is operable as the UE 2. The terminal 40 includes a processor 41, a storage device 42, a communication interface 43 (communication IF 43), an input device 44, and a display 45. These components of the terminal 40 are connected to each other via a bus 46. The processor 41, the storage device 42, the communication IF 43, the input device 44, and the display 45 may be the same as the processor 21, the storage device 22, the communication IF 23, the input device 24, and the display 25, respectively. Therefore, description of these components will be omitted.

Each of the processors 21, 41 may be, for example, a central processing unit (CPU). The CPU is also called a microprocessor unit (MPU). Each of the processors 21, 41 may have a single processor configuration or a multi-processor configuration. A single physical CPU connected by a single socket may have a multi-core configuration. Each of the processors 21, 41 may include a computation device with various circuit configurations such as a digital signal processor (DSP) or a graphics processing unit (GPU). The processors 21, 41 may be configured to cooperate with at least one of the following circuits: an integrated circuit (IC), other digital circuits, analog circuits, etc. Examples of the integrated circuit include a large scale integration (LSI) circuit, an application-specific integrated circuit (ASIC), and a programmable logic device (PLD). Examples of the PLD include a field-programmable gate array (FPGA). Examples of the processors 21, 41 include a microcontroller (MCU), a system-on-a-chip (SoC), a system LSI, and a chipset.

### Process Example

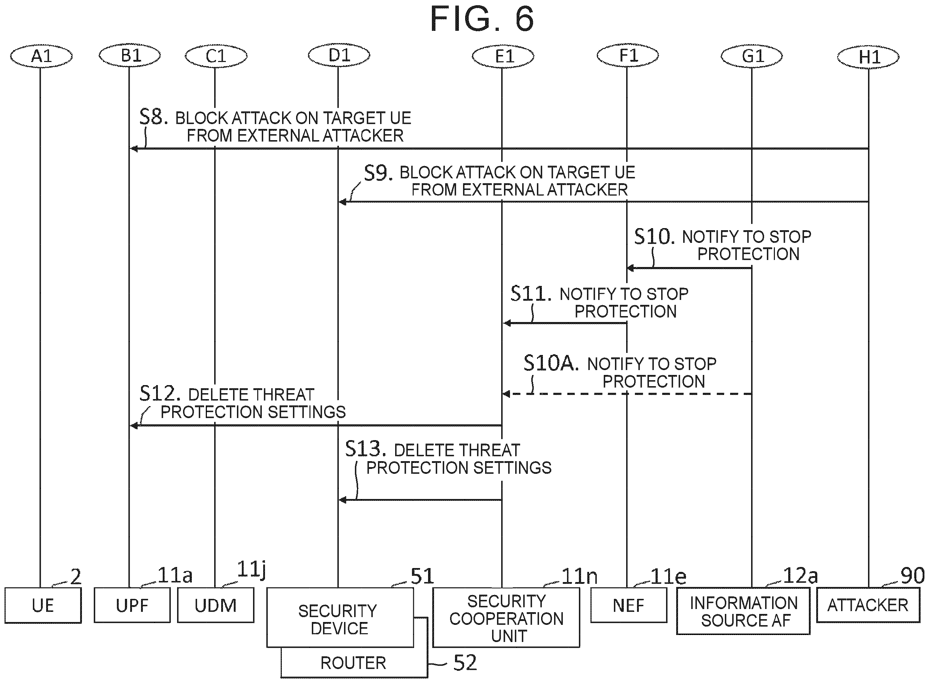

FIGS. 5 and 6 are sequence diagrams illustrating the process of receiving threat information and the protection process in the communication system. FIGS. 5 and 6 are connected through terminals indicated by A1 to H1. In this process, the information source AF 12a first notifies the NEF 11e of threat information (S1). Notification of the threat information can also be called notification of protection information. For example, as illustrated in FIG. 2, the threat information can include information identifying the attacker 90 and information identifying the target UE 2 targeted for an attack. The NEF 11e receives the threat information as an example of the reception process.

The NEF 11e then notifies the security cooperation unit 11n of the threat information (protection information) (S2). In a situation where the information source AF 12a is trusted by the MNO of the communication system, the information source AF 12a can directly notify the security cooperation unit 11n of the threat information (protection information) without via the NEF 11e (S1A). The security cooperation unit 11n receives the threat information as an example of the reception process.

Next, the security cooperation unit 11n acquires, from the notified threat information, information identifying the target UE 2 targeted for an attack in the threat information. The security cooperation unit 11n then sends to the UDM 11j a message requesting to search for information on the target UE 2 or UPF information on the UPF to which the target UE 2 is connected (S3). This search request message includes information identifying the target UE 2. The information identifying the target UE 2 is illustrated in FIG. 2. Examples of the information identifying the target UE 2 include a destination IP address, a destination port number, the model of the target UE 2, the type and version of an OS, the type and version of a computer program installed on the target UE 2, and information identifying a moving object equipped with the target UE 2 (vehicle model).

The UDM 11j then responds to the security cooperation unit 11n with the information on the target UE 2 such as a unique identifier in the 5GC or the UPF information on the UPF to which the target UE 2 is connected (S4). The UPF information is an identifier that can uniquely identify any UPF in the 5GC, such as an IP address or a Uniform Resource Identifier (URI).

In response to the request to search for information on the target UE 2 from the security cooperation unit 11n (S3), the UDM 11j may acquire from the contract data in the subscriber related information whether the protection process is executable, and respond to the security cooperation unit 11n (S4). The security cooperation unit 11n needs to execute the protection process only on the UE 2 for which the protection process is set to be executable in the contract data. The security cooperation unit 11n may execute the protection process only on the UE 2 of the user whose contract data specifies execution of the protection process.

When the security cooperation unit 11n receives a response such as the information on the target UE 2 or the UPF information on the UPF to which the target UE 2 is connected, the security cooperation unit 11n performs threat protection settings for the UPF 11a to which the target UE 2 is connected (S5). The protection settings are, for example, settings to perform a process of blocking, filtering out, or mitigating packets or traffic from the attacker 90 on the UPF 11a. The packets or traffic from the attacker 90 is identified by the header, additional information identifying the attacker 90, etc. in the threat information illustrated in FIG. 2.

With the protection settings, the security cooperation unit 11n can block the packets or traffic from the attacker 90 at least in the UPF 11a with which the target UE 2 has established a UDP session. The security cooperation unit 11n may perform the protection settings for all the UPFs 11a including those other than the UPF 11a to which the target UE 2 is connected. By performing the protection settings for all the UPFs 11a, the security cooperation unit 11n can uniformly protect against attacks in the entire communication network managed by the communication system.

Similarly, the security cooperation unit 11n performs the threat protection settings for the external security device 51, router 52, etc. connected via the DN 5, with the UPF 11a to which the target UE 2 is connected serving as an anchor. (S6). As described above with reference to FIG. 1, the UPF 11a in the last stage connected to the DN 5 is called a PSA UPF. The UPF 11a provided between the RAN 3 and the PSA UPF is called an I-UPF. The above protection settings may be performed for either the PSA UPF or the I-UPF.

Each of the security device 51 and the router 52 may be one of the AFs 12. When each of the security device 51, the router 52, etc. is one of the AFs 12, the security cooperation unit 11n may request notification of the threat information and settings of the protection process to the security device 51, the router 52, etc. according to the request/response model. When each of the security device 51, the router 52, etc. is one of the AFs 12, the security cooperation unit 11n may provide the threat information and the information for setting the protection process to the security device 51, the router 52, etc. according to the subscribe/notify model. In the case of the subscribe/notify model, the security cooperation unit 11n notifies the security device 51, the router 52, etc. of generation of threat information when notified of the threat information as a trigger condition. When the security device 51, the router 52, etc. are notified of generation of threat information, they can acquire the threat information and the information for setting the protection process from the security cooperation unit 11n and set the protection process. With the above protection settings, the packets or traffic from the attacker 90 is blocked etc. at least in the security device 51, the router 52, etc. to which the target UE 2 is currently connected and for which connection is set.

When the protection settings are performed in S5 or S6, the target UE 2 is blocked from communicating with the attacker 90 (S7-1). The target UE 2 is also blocked from communicating with the attacker 90 by the security device 51, the router 52, etc. to which the target UE 2 is currently connected (S7-2). The security cooperation unit 11n may notify the target UE 2 of the threat information via the AMF 11b, and may cause the target UE 2 to perform the threat protection settings. The description will be continued with reference to FIG. 6.

With the threat protection settings described with reference to FIG. 5, the attack on the target UE 2 from the attacker 90 is blocked in the UPF 11a (S8). The attack on the target UE 2 from the attacker 90 is also blocked in the security device 51 and the router 52 (S9).

Thereafter, when there is no longer the threat posed by the attacker 90, the information source AF 12a receives from the organization outside the communication system a setting indicating that the threat has disappeared. The information source AF 12a then notifies the NEF 11e of a message requesting to stop protection (S10). The NEF 11e notifies the security cooperation unit 11n of the message requesting to stop protection (S11). In a situation where the information source AF 12a is trusted by the MNO of the communication system, the information source AF 12a can directly notify the security cooperation unit 11n of the message requesting to stop protection without via the NEF 11e (S10A).

When the security cooperation unit 11n is notified of the request to stop protection, the security cooperation unit 11n sends a message requesting to delete the threat protection settings to the UPF 11a (S12). The security cooperation unit 11n also sends the message requesting to delete the threat protection settings to the security device 51, the router 52, etc. (S13).

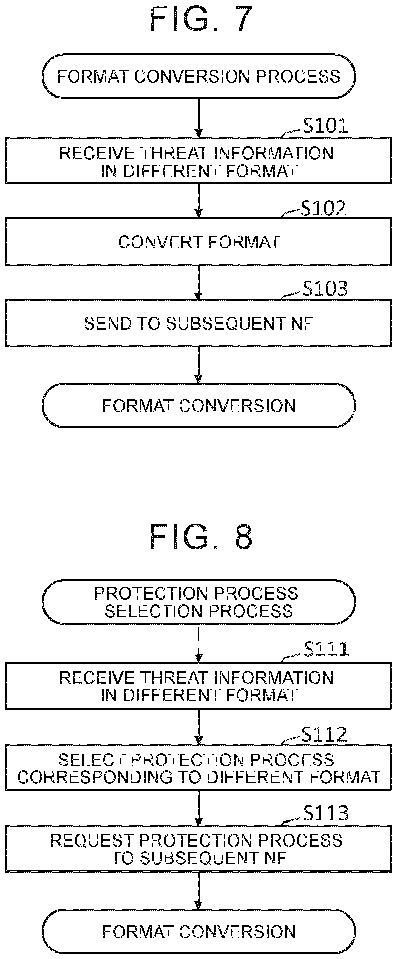

FIG. 7 illustrates a format conversion process that is performed by the security cooperation unit 11n etc. after S2 or S1A in FIG. 5. An example of the threat information provided from the information source AF 12a is illustrated in FIG. 2. However, the format of the threat information that is processable by the NFs 11 of the communication system may be different from the format of the threat information provided from the information source AF 12a. In such a case, for example, the security cooperation unit 11n translates the threat information provided from the information source AF 12a into a threat information format that is processable by the NFs 11 of the communication system.

For example, this process is activated when the security cooperation unit 11n receives threat information in a format different from the format supported by the NFs 11 of the communication system (S101). The security cooperation unit 11n receives threat information in a format different from the format supported by the NFs 11 of the communication system (referred to as "different format") from, for example, an application programming interface (API) dedicated to the different format (S101). Therefore, the process of FIG. 7 is not executed when the security cooperation unit 11n receives threat information in the format supported by the NFs 11 of the communication system.

The security cooperation unit 11n then converts the format of the threat information received from the API dedicated to the different format to the format supported by the NFs 11 of the communication system (S102). For example, the security cooperation unit 11n converts components in the different format out of the components such as the header and body illustrated in FIG. 2 to the threat information format that is processable by the NFs 11 of the communication system.

The security cooperation unit 11n then sends the threat information in the converted format to the subsequent NF 11 of the communication system (S103). For example, in S2 or S1A of FIG. 5, the subsequent NF 11 is the UDM 11j. In S6 of FIG. 5, the security cooperation unit 11n may select a protection method that can be set for the external security device 51, router 52, etc. based on the threat information in the converted format. FIG. 7 illustrates the format conversion process that is performed by the security cooperation unit 11n. However, such format conversion may be performed by other NFs 11 such as the NEF 11e, the UDM 11j, etc.

FIG. 8 illustrates a process of selecting a protection process. This process is executed when the security cooperation unit 11n receives threat information in a different format. That is, when the security cooperation unit 11n receives threat information in a different format (Sill), the security cooperation unit 11n may select a protection process responding to the threat information in the different format, instead of performing format conversion (S112). The security cooperation unit 11n can request the subsequent NF 11 to perform the selected protection process. For example, the subsequent NF 11 is the UDM 11j, the UPF 11a, etc. in S2 or S1A of FIG. 5. However, in S112, the security cooperation unit 11n may select a protection process to be set for the security device 51 or the router 52 in S6 of FIG. 5. The security cooperation unit 11n can then set the selected protection process for the security device 51, the router 52, etc. (S113). That is, the security cooperation unit 11n can select a protection process that can be requested to be set for the UDM 11j, the UPF 11a, the security device 51, or the router 52, based on the threat information in the different format.

### Effects of First Embodiment

As described above, the security cooperation unit 11n as an example of the control device executes the process of receiving threat information regarding a threat to the UE 2, namely a communication device that uses the communication network, from the organization outside the communication system. The security cooperation unit 11n executes the protection process of protecting the UE 2 based on the received threat information. The communication system can thus quickly protect from the attack on the UE 2 that uses the communication network.

In this case, the security cooperation unit 11n may uniformly execute the protection process on all the UEs 2 currently connected to the communication system in the UPFs 11a to which these UEs 2 are connected. Therefore, all the UEs 2 currently connected to the communication system can be protected without exception. The security cooperation unit 11n may uniformly execute the protection process in all the UPFs 11a of the communication system. In this case, the entire communication system can respond to the threat information.

The information source AF 12a can include, in the threat information, information identifying a specific communication device targeted for the attack (target UE 2). In this case, the security cooperation unit 11n may execute the protection process on the specific communication device. Therefore, the security cooperation unit 11n can execute the protection process with as little impact as possible on the processing of the communication system that provides the communication network.

When the specific communication device targeted for the attack is a device mounted on a moving object such as a vehicle, the information source AF 12a can include, in the threat information, information such as the make, model, and year of the vehicle equipped with the specific communication device. The information source AF 12a can then send a search request to the UDM 11j based on the information such as the vehicle model, and identify the target UE 2 targeted for the attack.

The security cooperation unit 11n receives the threat information using the NEF 11e provided in the 5GC. Therefore, the security cooperation unit 11n can receive the threat information and set and cancel the threat protection settings by the process consistent with the 5GC standard.

The security cooperation unit 11n directly receives the threat information without via the NEF 11e. Therefore, when the information source AF 12a is a reliable application server, the security cooperation unit 11n can quickly receive the threat information and set and cancel the threat protection settings.

The security cooperation unit 11n executes the protection process on the security device 51, router 52, etc. connected to the communication network via the DN 5. The security cooperation unit 11n executes the protection process on the security device 51, router 52, etc. each connected to the communication system (5GC etc.) as one of the AFs 12. That is, the security cooperation unit 11n can perform the threat protection settings for the security device 51, router 52, etc. on the communication network provided by the communication system, based on the threat information provided from the organization outside the communication system via the information source AF 12a.

The NFs 11 such as the security cooperation unit 11n, the NEF 11e, and the UDM 11j convert the threat information in a different format not supported by the communication system to the format supported by the NFs 11 of the communication system. The security cooperation unit 11n identifies and selects the protection process that responds to the threat information in the different format not supported by the NFs 11 of the communication system and that is executable by the NFs 11. The NFs 11 of the communication system, such as the security cooperation unit 11n, can execute the identified protection process in the communication system. The security cooperation unit 11n also identifies the protection process that responds to the threat information in the different format not supported by the communication system and that can be requested to the security device 51 or the router 52. The security cooperation unit 11n can thus set the identified protection process for the security device 51 or the router 52.

The UDM 11j holds the subscriber related information. The subscriber related information can be said to be an example of the contract data. That is, the communication system has a storage device (e.g., Unified Data Repository (UDR)) that stores contract data based on a contract between the user of the UE 2 and the operator (MNO) that manages the communication system. The security cooperation unit 11n identifies or determines a UE 2 to which the protection process is applied out of the UEs 2 based on the contract data held or managed by the UDM 11j. The communication system can thus perform the protection process by effectively using the contract data. For example, as the subscriber information, whether the protection process is executable by the security cooperation unit 11n or whether execution of the protection process is necessary may be stored in the UDR. The communication system can thus identify or limit the UE 2 to which the protection process is applied, based on the contract between the user and the MNO.

That is, in response to a request to search for information on the target UE 2 from the security cooperation unit 11n, the UDM 11j can acquire from the UDR whether the protection process is executable or whether execution of the protection process is necessary, and respond to the security cooperation unit 11n. Therefore, the security cooperation unit 11n needs to execute the protection process only on the UE 2 for which the protection process is set to be executable or execution of the protection process is set to be necessary in the contract data.

As described above, the information source AF 12a is provided as one of the AFs 12 connected to the 5GC that is the communication system. Therefore, the information source AF 12a can obtain threat information from the organization outside the communication system while cooperating with the NFs 11 of the 5GC. As illustrated in FIG. 1, the information source AF 12a may be provided in the EAS etc. connected to the DN 5. Alternatively, the information source AF12a may be provided in the UE 2.

### Second Embodiment

### Process Example

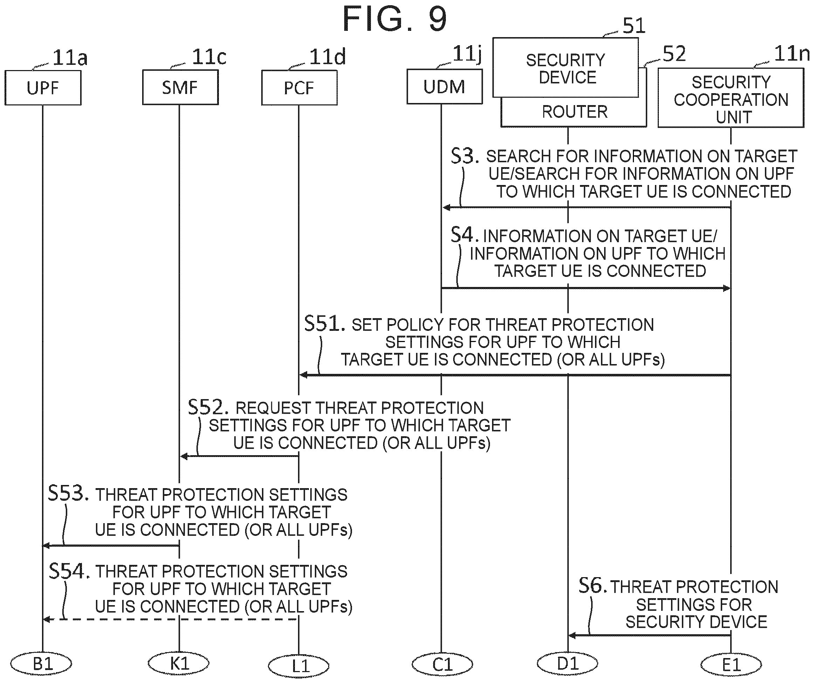

A communication system, control device, and communication method of a second embodiment will be described with reference to FIG. 9. In the first embodiment, the security cooperation unit 11n performs the threat protection settings for the UPF 11a based on the threat information received via the NEF 11e or directly from the information source AF 12a, and blocks communication with the attacker 90. However, instead of this process, the security cooperation unit 11n may request the PCF 11d to set a policy for protection settings. The PCF 11d may set the policy in response to the setting request and perform the protection settings for the UPF 11a either via the SMF 11c or directly without via the SMF 11c according to the set policy.

In the present embodiment, the processes other than the following processes (1), (2) are the same as in the first embodiment: (1) a process in which the security cooperation unit 11n sets a policy for the threat protection settings for the PCF 11d, and (2) a process in which the PCF 11d directly performs the protection settings for the UPF 11a either via the SMF 11c or directly without via the SMF 11c. Description of the same processes as those in the first embodiment will be omitted. The processes of the first embodiment other than the process by the PCF 11d and the process by the SMF 11c are executed in the same manner in the present embodiment as well.

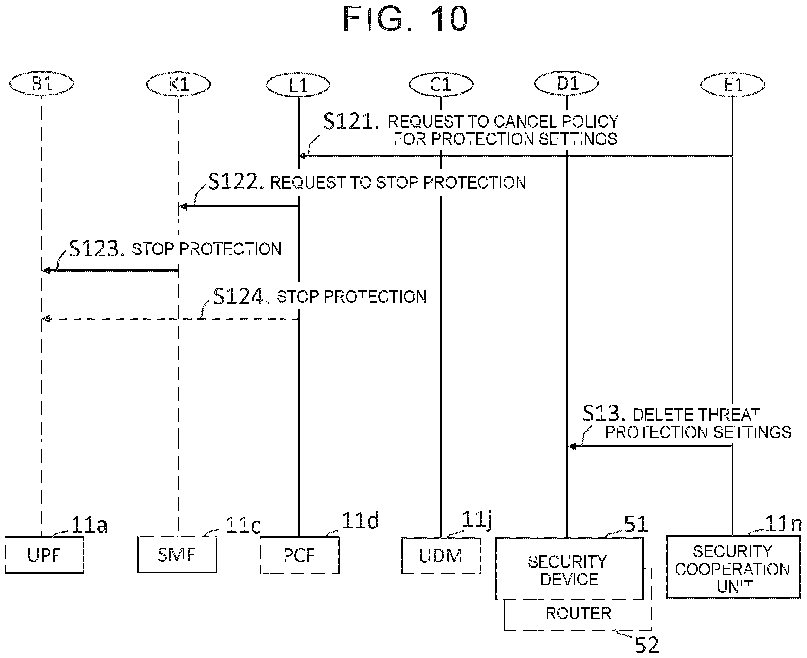

FIGS. 9 and 10 are sequence diagrams illustrating the protection process in the communication system. It is assumed that S1, S2, and S1A in FIG. 5 have been executed before FIG. 9. The process in FIG. 9 is followed by the process in FIG. 10 via the terminals B1, K1, L1, C1, D1, and E1. Since S3 and S6 in FIG. 9 are the same as those in FIG. 5, description thereof will be omitted.

FIG. 9 illustrates the process after the security cooperation unit 11n receives a response such as information on the target UE 2 or UPF information on the UPF to which the target UE 2 is connected (S4). In the present embodiment, the security cooperation unit 11n requests the PCF 11d to set a policy for performing the threat protection settings for the UPF 11a to which the target UE 2 is connected (S51). The PCF 11d then sets a policy for performing the threat protection setting. The PCF 11d requests the SMF 11c to perform protection settings for the UPF 11a to which the target UE 2 is connected, according to the set policy (S52). The SMF 11c performs the protection settings for the UPF 11a to which the target UE 2 is connected (S53). The PCF 11d may directly perform the protection settings for the UPF 11a according to the set policy without via the SMF 11c (S54). Thereafter, in FIG. 9, S6 is performed as in FIG. 5. Communication is blocked as in S7-1 and S7-2.

The description will be continued with reference to FIG. 10. Although S8 to S11 and S10A are performed as in FIG. 6, description thereof will be omitted. S8 to S11 and S10A are omitted in FIG. 10. In FIG. 10, when the security cooperation unit 11n is notified to stop protection (S11 and S10A in FIG. 6), the security cooperation unit 11n requests the PCF 11d to cancel the policy for performing the threat protection settings (S121). The PCF 11d then cancels the policy for performing the protection settings. The PCF 11d requests the SMF 11c to stop protection against the threat (S122). The SMF 11c then stops protection (S123). The PCF 11d may cancel the policy for performing the protection settings and directly stop protection for the UPF 11a without via the SMF 11c (S124). Thereafter, in FIG. 10, S13 is performed as in FIG. 6.

In the present embodiment as well, the same format conversion process as that described in FIG. 7 of the first embodiment may be executed. That is, the NFs 11 of the communication system, such as the security cooperation unit 11n, may convert threat information in a different format to a threat information format that is processable by the NFs 11 of the communication system. As in the process described with reference to FIG. 8, when the security cooperation unit 11n receives threat information in a different format, the security cooperation unit 11n may identify and select a protection process responding to the received threat information.

### Effects of Second Embodiment

As described above, the security cooperation unit 11n requests the PCF 11d to set a policy for the protection process, and executes the protection process in the UPF 11a through the PCF 11d. The PCF 11d directly performs the protection settings for the UPF 11a either via the SMF 11c or directly without via the SMF 11c. Therefore, the PCF 11d can integrally perform the protection process responding to the threat information in the entire communication network.

Like the process in FIG. 7 of the first embodiment, the security cooperation unit 11n executes the process to be executed when the format of the threat information is different from the format for which the protection process is executable in the NFs 11 of the communication system. That is, the security cooperation unit 11n etc. convert the format of the threat information to a format for which the protection process is executable in the NFs 11. Like the process in FIG. 8 of the first embodiment, when the format of the threat information is different from the format for which the protection process is executable, the security cooperation unit 11n identifies and selects the protection process to be executed in the UPF 11a, the security device 51, the router 52, etc. to respond to the threat information. The security cooperation unit 11n then executes the identified protection process in the UPF 11a, the security device 51, the router 52, etc. Therefore, the communication system can perform the protection process based on threat information in various formats from outside the communication system.

### Third Embodiment

### Process Example

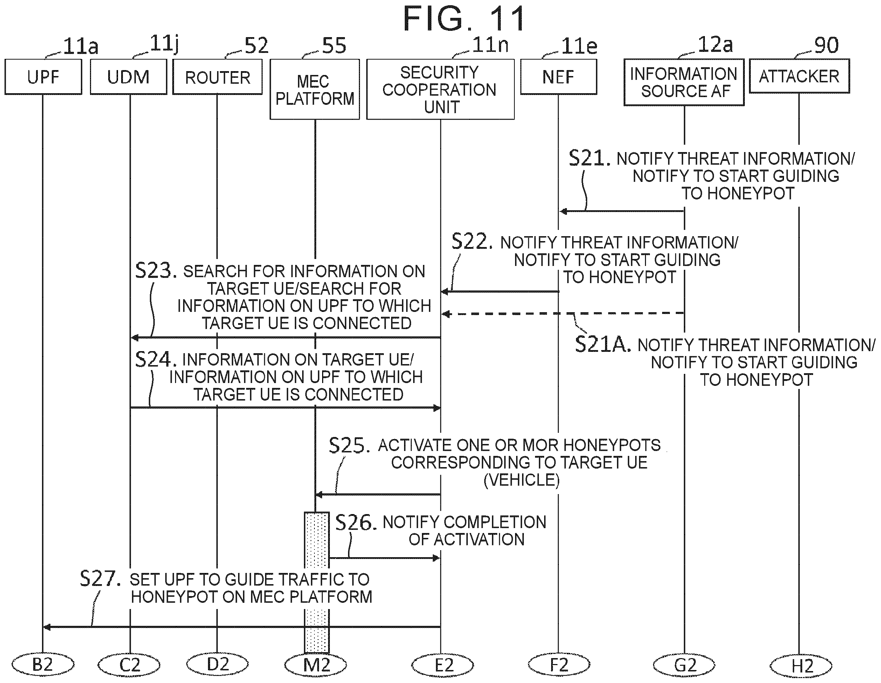

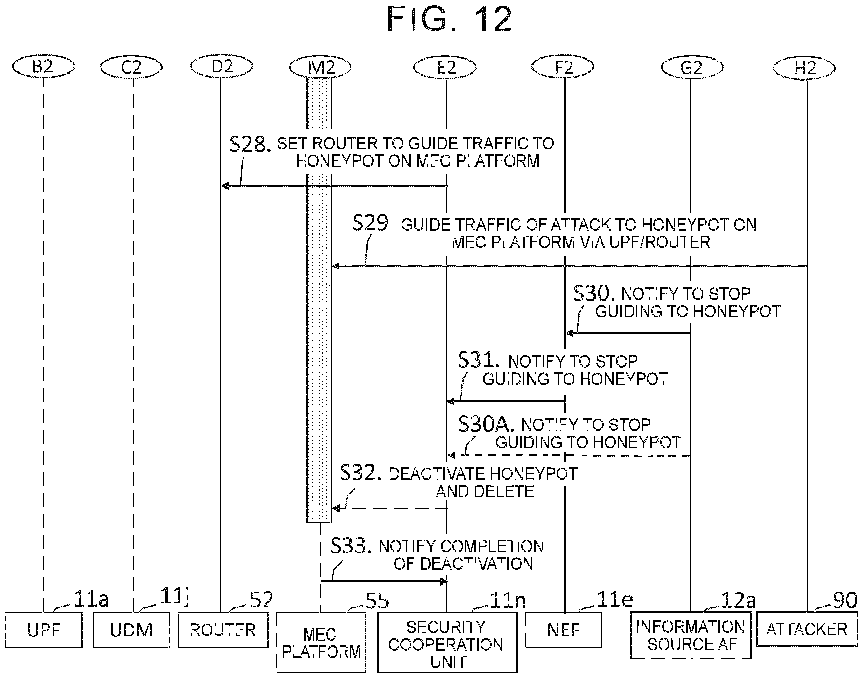

A communication system according to a third embodiment will be described with reference to FIGS. 11 and 12. In the first embodiment, the communication system is illustrated in which the protection process is set based on threat information. In the second embodiment, in addition to the process of the first embodiment, the security cooperation unit 11n performs the process of requesting the PCF 11d to set a policy for the threat protection settings. The PCF 11d performs the process of performing the threat protection settings for the UPF 11a either via the SMF 11c or directly without via the SMF 11c, according to the policy requested to be set.

In the present embodiment, a process of guiding traffic from the attacker 90 to a honeypot on Multi-access Edge Computing (MEC) based on threat information (hereinafter also referred to as "honeypot guidance process"). A honeypot refers to a computer on a MEC platform 55 that is a destination to which the traffic of the attacker 90 is guided. An application for responding to the traffic of the attacker 90 is executed in the honeypot. A system that provides the MEC by using virtual technology to a plurality of computers, network equipment, etc. is called the MEC platform 55.

The process of the present embodiment can be executed independently of the process of the first embodiment and the process of the second embodiment. Therefore, the communication system can select and execute the process of the first embodiment, the process of the second embodiment, or the process of the third embodiment as desired.

FIGS. 11 and 12 are sequence diagrams illustrating a process of receiving threat information and a honeypot guidance process in the communication system. FIGS. 11 and 12 are connected through the terminals indicated by A2 to H2. In this process, the information source AF 12a first notifies the NEF 11e of threat information and a request to start guiding to the honeypot (S21).

The NEF 11e then notifies the security cooperation unit 11n of the threat information and the request to start guiding to the honeypot (S22). In a situation where the information source AF 12a is trusted by the MNO of the communication system, the information source AF 12a can directly notify the security cooperation unit 11n without via the NEF 11e of the threat information and the request to start guiding to the honeypot (S21A).

Thereafter, the security cooperation unit 11n acquires, from the notified threat information and request to start guiding to the honeypot, information identifying the target UE 2 targeted for an attack in the threat information. The security cooperation unit 11n then sends to the UDM 11j a message requesting to search for information on the target UE 2 or UPF information on the UPF to which the target UE 2 is connected (S23).

The UDM 11j then responds to the security cooperation unit 11n with the information on the target UE 2 such as a unique identifier in the 5GC or the UPF information on the UPF to which the target UE 2 is connected (S24). The UPF information is an identifier that can uniquely identify any UPF in the 5GC, such as an IP address or a URI.

In response to the request to search for information on the target UE 2 from the security cooperation unit 11n (S23), the UDM 11j may acquire from the UDR etc. whether the honeypot guidance process is executable, and respond to the security cooperation unit 11n (S24). The security cooperation unit 11n needs to execute the honeypot guidance process only on the UE 2 for which the honeypot guidance process is set to be executable or execution of the honeypot guidance process is set to be necessary etc. in the contract data.

When the security cooperation unit 11n receives a response such as the information on the target UE 2 or the UPF information on the UPF to which the target UE 2 is connected, the security cooperation unit 11n activates one or more honeypots on the MEC that is accessible with the UPF 11a to which the target UE 2 is connected serving as an anchor (S25). However, the honeypot is not limited to that using the UPF 11a to which the target UE 2 is connected as an anchor. In other words, the security cooperation unit 11n can guide packets or traffic from the attacker 90 to the honeypot via the UPFs 11a in a plurality of stages. The honeypot to be activated is activated by, for example, executing the type of application according to the threat information. For example, the honeypot to be activated is activated with parameters according to the threat information set in the application. The type or setting according to the threat information mean, for example, the type or setting according to the communication protocol, source domain, destination IP address, destination port number, and type of source application from the attacker 90, and additional information identifying the attacker 90. The MEC platform 55 then returns to the security cooperation unit 11n a response indicating that activation of the honeypot has been completed (S26).

Here, the MEC platform 55 is an example of the information processing environment connected to the outside of the communication system in the DN 5 connected to the PSA UPF that serves as an anchor. Therefore, activating a honeypot is an example of creating a simulated reception system that simulates the communication device or the environment inside a moving object equipped with the communication device. For example, the environment inside a moving object means that the honeypot executes an OS, application, etc. installed on the UE 2 inside the moving object.

The security cooperation unit 11n then sets the UPF 11a to which the target UE 2 is connected to guide the traffic to the honeypot on the MEC platform 55 (S27). Guiding may be performed through the UPFs 11a in a plurality of stages. The security cooperation unit 11n and the associated NF 11 may execute the same process as that described in the second embodiment. That is, the security cooperation unit 11n may guide the traffic to the honeypot on the MEC platform 55 in response to a request to the PCF 11d to set a policy and a request to the UPF 11a to guide from the PCF 11d to the SMF 11c.

At this time, the PCF 11d may guide the traffic to the honeypot on the MEC platform 55 by directly setting the UPF 11a to guide the traffic without via the SMF 11c.

An example of the specific procedures of guiding the attacker's traffic to the honeypot is as follows. For example, 6.3 Edge Relocation of 3GPP (registered trademark) TS23.548 V18.3.0 (2023-09) describes the procedures of relocating the Edge Application Server (EAS) on the DN 5 that is accessed by the UEs 2 and relocating the PSA UPF to which the EAS is connected. This section 6.3 also describes that this PSA UPF replaces the IP address and port number of the EAS for the traffic related to an application using the EAS. This section 6.3 also describes a request that the AF 12 makes to the communication system (5GC) to simultaneously connect to both a source PSA and a target PSA at the time of relocating the EAS, and a process in response to the request. The source PSA refers to the PSA to which the UEs 2 are connected before relocation of the EAS, and the target PSA refers to the PSA to which UEs 2 are connected after relocation of the EAS. These standards relate to the process of replacing an EAS and an PSA UPF to which the UEs 2 access. In the present embodiment, the procedures of these standards are modified and applied to the procedures of guiding packets or traffic of an attack to a honeypot by the security cooperation unit 11n.

The conventional procedures of Network Address Translation (NAT) gateway on a network can be applied to the specific procedures of guiding the attacker's traffic to a honeypot. The procedures are illustrated as follows.

(11) The security cooperation unit 11n associates a set of a target destination address and a target destination port number with a set of a source destination address and a source destination port number in the UPF 11a either directly or via the PCF 11d and the SMF 11c. The security cooperation unit 11n then sets the association between the source and the target in an address translation table for guidance. The source destination address and the source destination port number refer to the destination address and the destination port number before address translation, and refer to the destination of the packets or traffic from the attacker 90. The target destination address and the target destination port number refer to the destination address and the destination port number after address translation, and are the destination address and destination port number to the honeypot.

(12) For example, the security cooperation unit 11n instructs the UPF 11a to perform the address translation process using the address translation table for guidance in (11) on the packets or traffic from a source having the characteristics illustrated in FIG. 2. The security cooperation unit 11n instructs the UPF 11a to perform the address translation process directly or via the PCF 11d and the SMF 11c.

(13) Thereafter, the UPF 11a guides the attacker's packets to the honeypot. The session between the UE 2 and the attacker 90 disappears due to, for example, timeout. As mentioned above, the UPF 11a may have a multi-stage configuration between the RAN 3 and the DN 5. The settings (11) and (12) above can be performed for either the PSA UPF or the I-UPF.

The description will be continued with reference to FIG. 12. The security cooperation unit 11n guiding the packets or traffic of the attacker 90 to the honeypot on the MEC platform 55 is an example of guiding attacks from inside and outside the communication network provided by the communication system to the simulated reception system. Possible attacks from inside the communication network are attacks from another UE inside the MNO to which a UE 2 is connected or from the 5GC functions hacked by the attacker 90. The possible content of such attacks are Denial of Service attacks (DoS), Distributed Denial of Service attacks (DDoS), attacks on various vulnerabilities, etc., like attacks from outside the communication network. DoS refers to a cyberattack in which an attacker maliciously sends a large amount of data to an information processing device such as a server to cause congestion in a server etc. by a large number of accesses. DDoS refers to an attempt to disrupt normal processing of an information processing device such as a server by sending a large number of packets from multiple computers to the information processing device.

As in S27, the security cooperation unit 11n may set the external router 52 etc. connected via the DN 5 to the PSA UPF to which the target UE 2 is connected to guide the traffic to the honeypot on the MEC platform 55 (S28). The external router 52 etc. may be connected to the communication system as one of the AFs 12. With the above traffic guiding setting, the packets or traffic from the attacker 90 does not reach the target UE 2 and received by the honeypot at least in the router 52 etc. to which the target UE 2 is currently connected and for which connection is set (S29).

Thereafter, when there is no longer the threat posed by the attacker 90, the information source AF 12a receives from the organization outside the communication system a setting indicating that the threat has disappeared. The information source AF 12a then notifies the NEF 11e to stop guiding to the honeypot (S30). The NEF 11e requests the security cooperation unit 11n to stop protection (S31). In a situation where the information source AF 12a is trusted by the MNO of the communication system, the information source AF 12a can directly notify the security cooperation unit 11n without via the NEF 11e to stop guiding to the honeypot (S30a).

When the security cooperation unit 11n is notified to stop guiding to the honeypot, the security cooperation unit 11n causes the UPF 11a to stop guiding to the honeypot. Disabling the setting includes, for example, clearing or deleting the address translation table for guidance. The security cooperation unit 11n also sends to the MEC platform 55 a message requesting to deactivate the honeypot and delete various settings (S32). When the MEC platform 55 completes deactivation of the honeypot and deletion of various settings, the MEC platform 55 responds to the security cooperation unit 11n with a notification (S33).

### Effects of Third Embodiment

Since the traffic is guided as described above, at least the traffic from the attacker 90 on the target UE 2 does not reach the target UE 2 and is received by the honeypot. Therefore, the communication system and NFs 11 of the present embodiment can effectively protect against attacks from outside the communication system. The communication system and NFs 11 of the present embodiment can earn time until further actions are taken against attacks from outside the communication system.

### Effects of First to Third Embodiments

Manufacturers, OEMs, vendors, etc. that manufacture or sell UEs 2 or moving objects equipped with UEs 2 can protect against cyberattacks by the communication network and reduce damage caused by attacks. For example, it is possible to earn time until a modification patch for an OS or application is prepared. MNOs that manage a communication network and provides the communication network to users can protect the users. The MNOs can also obtain means for charging the manufacturers, the OEMs, the vendors, and vendors of over-the-top (OTT) that provides media content to users, OS, or terminals.

### Other Embodiments

The above embodiment and modifications are merely illustrative, and the present disclosure may be modified as appropriate without departing from the spirit and scope of the present disclosure. The processes and means described in the present disclosure can be implemented in any combination as long as no technical contradiction occurs.

The processes described as being performed by a single device may be performed in a distributed manner by a plurality of devices. The processes described as being performed by different devices may be performed by a single device. It is possible to flexibly change the hardware configuration (server configuration) that implements functions of a computer system.

The present disclosure can also be implemented by supplying computer programs implementing the functions described in the above embodiments to a computer and causing one or more processors of the computer to read and execute the computer programs. Such computer programs may be provided to the computer by a non-transitory computer-readable storage medium that is connectable to a system bus of the computer, or may be provided to the computer via a network. Examples of the non-transitory computer-readable storage medium include: any type of disk or disc such as a magnetic disk (floppy (registered trademark) disk, hard disk drive (HDD), etc.) and an optical disc (compact disc read-only memory (CD-ROM), digital versatile disc (DVD), Blu-ray disc, etc.); and any type of medium suitable for storing electronic instructions such as a read-only memory (ROM), a random access memory (RAM), an erasable programmable read-only memory (EPROM), an electrically erasable programmable read-only memory (EEPROM), a magnetic card, a flash memory, and an optical card.

## Claims

1. A communication system configured to provide a communication network to a communication device (2), the communication system comprising a control device (11n) configured to execute
a reception process of receiving, from an organization outside the communication system, threat information regarding a threat to the communication device (2) that uses the communication network, and
a protection process of protecting the communication device (2) based on the received threat information.

2. The communication system according to claim 1, wherein the control device (11n) is configured to uniformly execute the protection process on each communication device (2) connected to the communication system.

3. The communication system according to claim 1, wherein:
the threat information includes information identifying a specific communication device (2) targeted for an attack of the threat; and
the control device (11n) is configured to execute the protection process on the specific communication device (2).

4. The communication system according to claim 3, wherein:
the specific communication device (2) is mounted on a vehicle; and
the information identifying the specific communication device (2) includes information identifying the vehicle.

5. The communication system according to claim 1, wherein:
the communication network includes a 5G core network; and
the control device (11n) is configured to receive the threat information regarding the threat using a Network Exposure Function (11e) provided in the 5G core network.

6. The communication system according to claim 1, wherein:
the communication network includes a 5G core network; and
the control device (11n) is configured to directly receive the threat information regarding the threat without via a Network Exposure Function (11e) provided in the 5G core network.

7. The communication system according to claim 5, wherein the control device (11n) is configured to execute the protection process in a User Plane Function (11a) through a Policy Control Function (11d) provided in the 5G core network.

8. The communication system according to claim 7, wherein the control device (11n) is configured to
when a format of the threat information is different from a format for which the protection process is executable, convert the format of the threat information to the format for which the protection process is executable, or identify the protection process to be executed in the User Plane Function (11a) to respond to the threat information, and
execute the protection process responding to the threat information in the converted format or the identified protection process in the User Plane Function (11a).

9. The communication system according to claim 1, wherein the control device (11n) is configured to execute the protection process on a router (52) connected to the communication network or a security device (51) connected to the communication network.

10. The communication system according to claim 9, wherein the control device (11n) is configured to
when a format of the threat information is different from a format for which the protection process is executable, convert the format of the threat information to the format for which the protection process is executable, or identify the protection process to be executed in the router (52) or the security device (51) to respond to the threat information, and
execute the protection process responding to the threat information in the converted format or the identified protection process in the router (52) or the security device (51).

11. The communication system according to claim 1, further comprising a storage device (22) configured to store contract data based on a contract between a user of the communication device (2) and a business operator that manages the communication system, wherein
the control device (11n) is configured to determine, based on the contract data, the communication device (2) to which the protection process is applied out of a plurality of the communication devices (2).

12. The communication system according to claim 1, wherein the control device (11n) is configured to
create a simulated reception system in an information processing environment (55) connected to outside of the communication system, the simulated reception system being a reception system that simulates an environment inside the communication device (2) or a moving object equipped with the communication device (2), and
guide an attack from inside or outside of the communication network provided by the communication system to the simulated reception system.

13. The communication system according to claim 1, wherein:
the communication network includes a 5G core network; and
the control device (11n) is provided in the 5G core network.

14. The communication system according to claim 1, wherein:
the communication network includes a 5G core network; and
the control device (11n) is provided as an Application Function (12) connected to the 5G core network.

15. A communication method in a communication system configured to provide a communication network to a communication device (2), the communication method comprising:
executing a reception process of receiving, from an organization outside the communication system, threat information regarding a threat to the communication device (2) that uses the communication network; and
executing a protection process of protecting the communication device (2) based on the received threat information.
